# EUROPEAN PATENT APPLICATION

(11) **EP 4 813 876 A1**
(43) Date of publication of application: **30.09.2026**
(21) Application number: 25867180.9
(22) Date of filing: 02.12.2025
(51) Int. Cl.: B65G 23/44, B65G 45/24, B65G 45/22, B65G 45/10, B65G 17/08, B65G 21/20, B08B 5/04, B08B 7/02, B08B 5/02

(54) **CONVEYOR APPARATUS**

(30) Priority: 04.02.2025 KR 20250014039
(71) Applicant: LG ENERGY SOLUTION, LTD., Seoul 07335 (KR)
(72) Inventor: Lee, Su Ho, Daejeon 34122 (KR)
(74) Representative: Goddar, Heinz J.
(86) International application number: PCT/KR2025/020471
(87) International publication number: WO 2026/168701

(57) **Abstract**

Disclosed is a conveyor apparatus including a conveyor belt configured to allow an object to be conveyed to be seated thereon, a frame part having an inner space in which a part of the conveyor belt is received, a driving part configured to drive the conveyor belt to one side or the other side, a roller part configured to guide the conveyance of the conveyor belt, a tension adjustment part configured to adjust tension of the conveyor belt in contact with a part of the conveyor belt, and a foreign matter removal part configured to remove foreign matter from the conveyor belt and/or the inner space of the frame part, wherein the tension adjustment part includes a tension roller configured to provide pressure to the conveyor belt in contact with the conveyor belt, a cylinder part coupled to the tension roller, the cylinder part being configured to provide a forward or backward driving force to the tension roller, and a sensor unit configured to detect the amount of tension applied to the conveyor belt.

## Description

### [Technical Field]

This application claims the benefit of priority to Korean Patent Application No. 10-2025-0014039 filed on February 4, 2025, the disclosure of which is incorporated herein by reference in its entirety.

The present invention relates to a conveyor apparatus, and more particularly to a conveyor apparatus capable of automatically adjusting the tension of a conveyor belt and removing foreign matter.

### [Background Art]

Generally, conveyor apparatuses are used in manufacturing plants or places where goods are loaded and stored to convey manufactured goods or stored goods from one location to another.

A conveyor apparatus is primarily operated by continuously rotating a belt made of rubber, plastic, metal, etc., to convey objects. The tension applied to the belt varies depending on the weight of an object to be conveyed seated on the belt, or the belt contracts or expands due to the repetitive operation of the conveyor apparatus, whereby the tension of the belt is changed.

If the tension of the conveyor belt is too low, the belt may become loose, slip, or fail to move properly. Conversely, if the tension is too high, the belt may stretch excessively or break. Therefore, it is necessary to periodically check the tension of the belt.

In addition, when the conveyor apparatus conveys an object, foreign matter falling from the object to be conveyed may enter the interior of the apparatus and accumulate or adhere to an inner surface of the conveyor belt.

Particularly when the object to be conveyed is an electrode, if an active material is detached from the electrode, the active material may not only accumulate in the conveyor apparatus but may also adhere to an inner surface of a frame, which may cause the apparatus to jam or malfunction.

### (Prior Art Document)

(Patent Document 1) Korean Registered Patent Publication No. 10-2372006

### [Disclosure]

### [Technical Problem]

The present invention has been made in view of the above problems, and it is an object of the present invention to provide a conveyor apparatus capable of automatically adjusting the amount of tension applied to a conveyor belt by detecting the amount of tension of the conveyor belt.

It is another object of the present invention to provide a conveyor apparatus capable of removing foreign matter generated during an object conveying process.

### [Technical Solution]

As a technical means for achieving the above objects, a conveyor apparatus according to an embodiment of the present invention includes a conveyor belt (100) configured to allow an object to be conveyed to be seated thereon, a frame part (200) having an inner space (S) in which a part of the conveyor belt (100) is received, a driving part (300) configured to drive the conveyor belt (100) to one side or the other side, a roller part (400) configured to guide the conveyance of the conveyor belt (100), a tension adjustment part (500) configured to adjust tension of the conveyor belt (100) in contact with a part of the conveyor belt (100), and a foreign matter removal part (600) configured to remove foreign matter from the conveyor belt (100) and/or the inner space (S) of the frame part (200), wherein the tension adjustment part (500) includes a tension roller (510) configured to provide pressure to the conveyor belt (100) in contact with the conveyor belt (100), a cylinder part (520) coupled to the tension roller (510), the cylinder part being configured to provide a forward or backward driving force to the tension roller (510), and a sensor unit (530) configured to detect the amount of tension applied to the conveyor belt (100).

Also, in the conveyor apparatus according to the embodiment of the present invention, the cylinder part (520) may include a cylinder unit (521) coupled to the tension roller (510) and a housing (522) configured to receive the cylinder unit (521), and the tension adjustment part (500) may further include an air supply part (540) configured to inject air into an inner space of the housing (522) to adjust the pressure in the inner space of the housing (522).

Also, the conveyor apparatus according to the embodiment of the present invention may further include a controller (700) configured to measure the detected amount of tension and to adjust the driving force of the cylinder part (520) through the air supply part (540).

Also, in the conveyor apparatus according to the embodiment of the present invention, the foreign matter removal part (600) may include a suction part (610) disposed in the inner space (S) of the frame part (200), the suction part being configured to suction air and/or foreign matter from the conveyor belt (100), an air ejection unit (620) disposed in the inner space (S) of the frame part (200), the air ejection unit being configured to eject air toward the conveyor belt (100), and a vibration providing unit (630) disposed outside the frame part (200), the vibration providing unit being configured to provide vibration to the frame part (200) in order to remove foreign matter attached to an inner surface of the frame part (200).

Also, in the conveyor apparatus according to the embodiment of the present invention, the suction part (610) may include a first suction unit (611) configured to suction air and/or foreign matter from the conveyor belt (100) conveyed above the frame part (200), a second suction unit (612) configured to suction air and/or foreign matter from the conveyor belt (100) conveyed in the inner space (S), and a dust collection unit (613) configured to collect the foreign matter suctioned by the first suction unit (611) and the second suction unit (612).

Also, in the conveyor apparatus according to the embodiment of the present invention, the dust collection unit (613) may be disposed outside the frame part (200).

Also, in the conveyor apparatus according to the embodiment of the present invention, the foreign matter removal part (600) may further include a dust collection chamber (640) communicating with the inner space (S) of the frame part (200), the dust collection chamber being configured to collect the foreign matter removed by the vibration providing unit (630), the dust collection chamber being located at the bottom of the frame part (200).

Also, in the conveyor apparatus according to the embodiment of the present invention, the conveyor belt (100) may include a plurality of unit blocks (110), each of the plurality of unit blocks including a seating member (111) on which the object to be conveyed is seated and a link member (112) configured to support one surface of the seating member (111), and a plurality of connection shafts (120) configured to connect the plurality of unit blocks (110) to each other.

Also, in the conveyor apparatus according to the embodiment of the present invention, the driving part (300) may include a first sprocket (310) provided in contact with the conveyor belt (100), the first sprocket being configured to transmit a driving force for conveyance to the conveyor belt (100), a second sprocket (320) connected to the first sprocket (310) via a shaft member, a third sprocket (330) connected to the second sprocket (320) via a chain member (340) fastened to teeth formed on an outer circumferential surface of the second sprocket (320), and a motor (350) connected to the third sprocket (330), the motor being configured to a driving force for rotation to the third sprocket (330).

Also, in the conveyor apparatus according to the embodiment of the present invention, the driving part (300) may further include a handle unit (360) axially connectable to the first sprocket (310) so as to allow the first sprocket (310) to be manually rotated in a state in which provision of the driving force for rotation from the motor is interrupted.

Also, in the conveyor apparatus according to the embodiment of the present invention, the handle unit (360) may include a fastening shaft (361) inserted into the center of the first sprocket (310), an extension member (362) extending perpendicularly from the fastening shaft (361), and a handle portion (363) extending perpendicularly from the extension member (362), the handle portion extending in the same axial direction as the fastening shaft (361).

Also, in the conveyor apparatus according to the embodiment of the present invention, the roller part (400) may include a first roller (410) located between the conveyor belt (100) conveyed above the frame part (200) and the first sprocket (310), the first roller being provided in contact with the seating member (111), and a second roller (420) located between the conveyor belt (100) conveyed above the frame part (200) and the tension adjustment part (500), the second roller being provided in contact with the seating member (111).

Also, in the conveyor apparatus according to the embodiment of the present invention, the first roller (410) may be provided on an outer circumferential surface thereof with a first friction member (411), and the second roller (420) may be provided on an outer circumferential surface thereof with a second friction member (421).

### [Advantageous Effects]

As is apparent from the above description, a conveyor apparatus according to the present invention includes a tension adjustment part capable of detecting the amount of tension applied to a conveyor belt, including a sensor unit, whereby it is possible to automatically adjust the amount of tension applied to the conveyor belt.

In addition, the conveyor apparatus according to the present invention includes a foreign matter removal part configured to eject air toward the conveyor belt or to suction air and foreign matter from the conveyor belt, whereby it is possible to remove foreign matter from the conveyor belt and an inner space.

Furthermore, in the conveyor apparatus according to the present invention includes a foreign matter removal part configured to provide vibration to a frame part, whereby it is possible to remove foreign matter from the frame part.

### [Description of Drawings]

FIG. 1 is a perspective view of a conveyor apparatus according to the present invention when viewed from one side.
FIG. 2 is a perspective view of the conveyor apparatus according to the present invention when viewed from the other side.
FIG. 3 is a view showing the interior of the conveyor apparatus according to the present invention when viewed from one side.
FIG. 4 is an enlarged view illustrating a conveyor belt constituting the conveyor apparatus according to the present invention.
FIG. 5 is an enlarged view of a driving part constituting the conveyor apparatus according to the present invention when viewed from one side.
FIG. 6 is an enlarged view of the driving part constituting the conveyor apparatus according to the present invention when viewed from the other side.
FIG. 7 is an exploded perspective view illustrating a handle unit of the driving part constituting the conveyor apparatus according to the present invention.
FIG. 8 is an enlarged view illustrating a tension adjustment part constituting the conveyor apparatus according to the present invention.
FIG. 9 is an enlarged view illustrating a cylinder part of the tension adjustment part constituting the conveyor apparatus according to the present invention.
FIG. 10 is an internal sectional view of the cylinder part constituting the conveyor apparatus according to the present invention.
FIG. 11 is an internal sectional view of the conveyor apparatus according to the present invention, illustrating a foreign matter removal part constituting the conveyor apparatus.
FIG. 12 is an enlarged view illustrating a first suction unit constituting the conveyor apparatus according to the present invention.
FIG. 13 is an enlarged view illustrating a second suction unit constituting the conveyor apparatus according to the present invention.
FIG. 14 is an enlarged view illustrating an air ejection unit constituting the conveyor apparatus according to the present invention.
FIG. 15 is an enlarged view illustrating a vibration providing unit constituting the conveyor apparatus according to the present invention.
FIG. 16 is a view illustrating the state in which tension is removed from the conveyor belt constituting the conveyor apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a conveyor apparatus according to the present invention will be described.

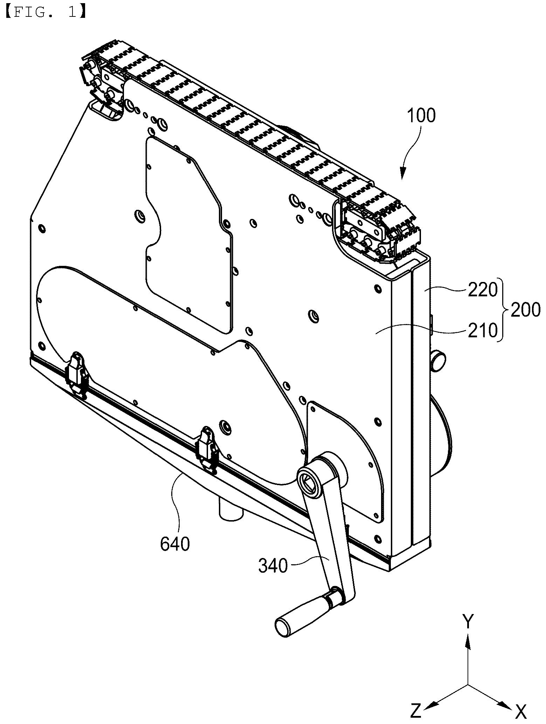

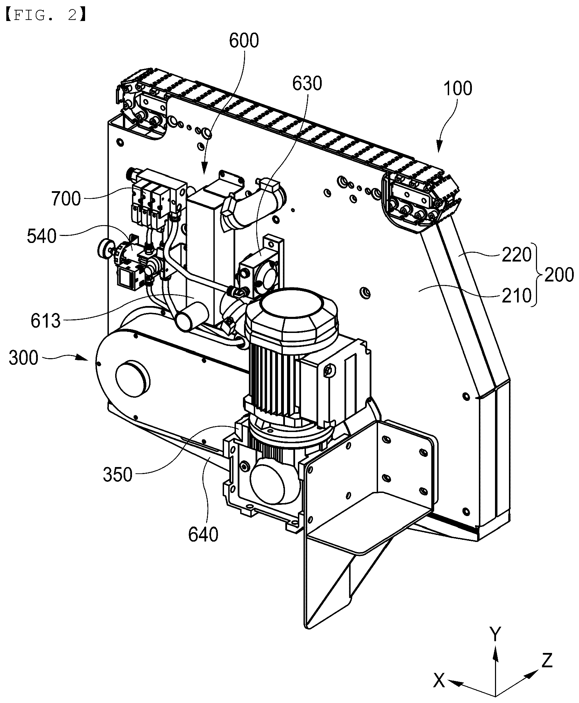

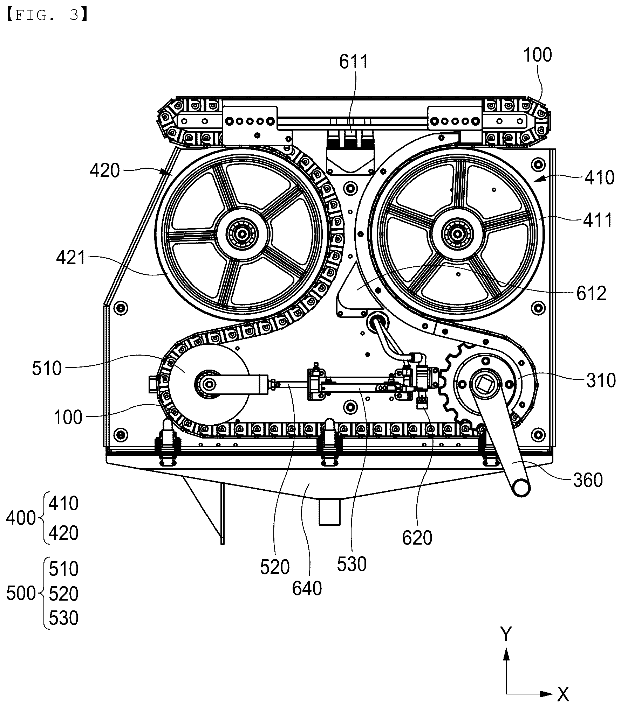

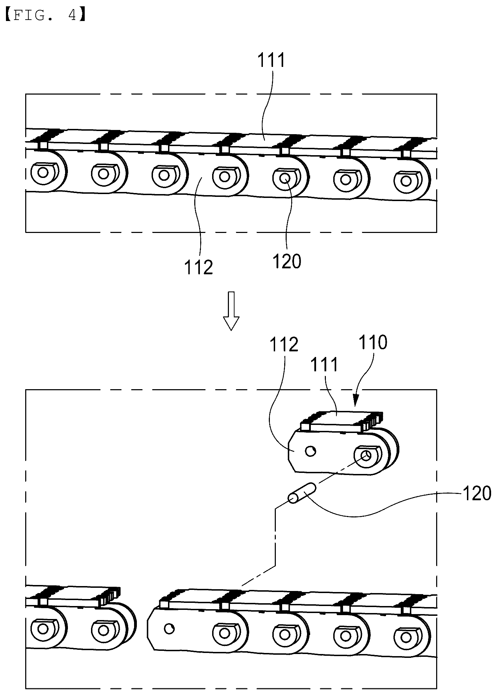

FIG. 1 is a perspective view of a conveyor apparatus according to the present invention when viewed from one side, and FIG. 2 is a perspective view of the conveyor apparatus according to the present invention when viewed from the other side. In addition, FIG. 3 is a view showing the interior of the conveyor apparatus according to the present invention when viewed from one side, and FIG. 4 is an enlarged view illustrating a conveyor belt constituting the conveyor apparatus according to the present invention.

Referring to FIGs. 1 to 4, the conveyor apparatus according to the present invention includes a conveyor belt 100, a frame part 200, a driving part 300, a roller part 400, a tension adjustment part 500, a foreign matter removal part 600, and a controller 700.

First, the conveyor belt 100 may be configured to allow an object to be conveyed to be seated thereon and to convey the object to one side or the other side along an X-axis. For example, the conveyor belt 100 may be provided as a continuous belt made of rubber, plastic, metal, or another material; however, in the present invention, the conveyor belt may be provided as a chain belt configured such that a plurality of unit blocks 110 is connected to each other via a plurality of connection shafts 120.

The unit block 110 may include a seating member 111 on which the object to be conveyed is seated and a link member 112 configured to support one surface of the seating member 111. The seating member 111 may have a flat planar shape such that the object to be conveyed can be seated thereon. In addition, the seating member 111 may have recessed areas and protruding areas formed repeatedly at both ends thereof such that adjacent seating members 111 can interlock with each other when the plurality of unit blocks 110 is connected to each other.

The link member 112 may be provided on one surface of the seating member 111 so as to be connected to an adjacent link member 112. For example, the link member 112 may include two members disposed spaced apart from each other, wherein the distance between the two members corresponding to one end may be less than the distance between the two members corresponding to the other end. In this case, the distance between the two members corresponding to the other end may be formed such that one end can be inserted between the two members corresponding to the other end. Therefore, when the plurality of unit blocks 110 is connected to each other, one end of the link member 112 may be inserted into the other end of the link member 112 adjacent thereto.

In addition, a through-hole may be formed in each of the one end and the other end of the link member 112, and as the connection shaft 120 is inserted through the through-hole in the state in which one end of the link member 112 is inserted into the other end of the link member 112 adjacent thereto, the plurality of unit blocks 110 may be connected to each other.

The conveyor belt 100 may be formed in an endless track shape in which the plurality of unit blocks 110 is continuously connected to each other.

The conveyor belt 100 including the plurality of unit blocks 110 is known to those skilled in the art; therefore, a more detailed description thereof will be omitted.

The frame part 200 may include a first frame 210 and a second frame 220 configured to form an inner space S in which the remainder of the conveyor belt 100, excluding a part of the conveyor belt 100 on which the object to be conveyed is seated, is received. In this case, the first frame 210 may be a front frame, and the second frame 220 may be a rear frame, or vice versa.

A part of the conveyor belt 100, some components of the driving part 300, the roller part 400, the tension adjustment part 500, and some components of the foreign matter removal part 600 may be received in the inner space S of the frame part 200.

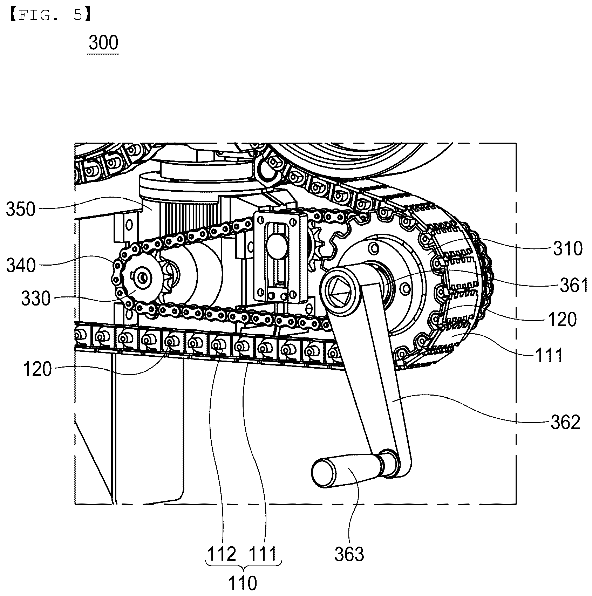

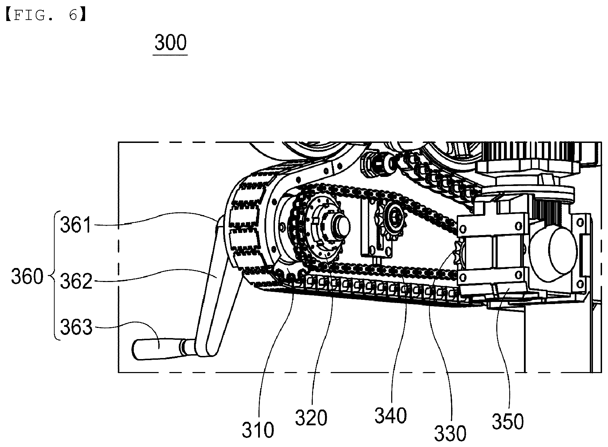

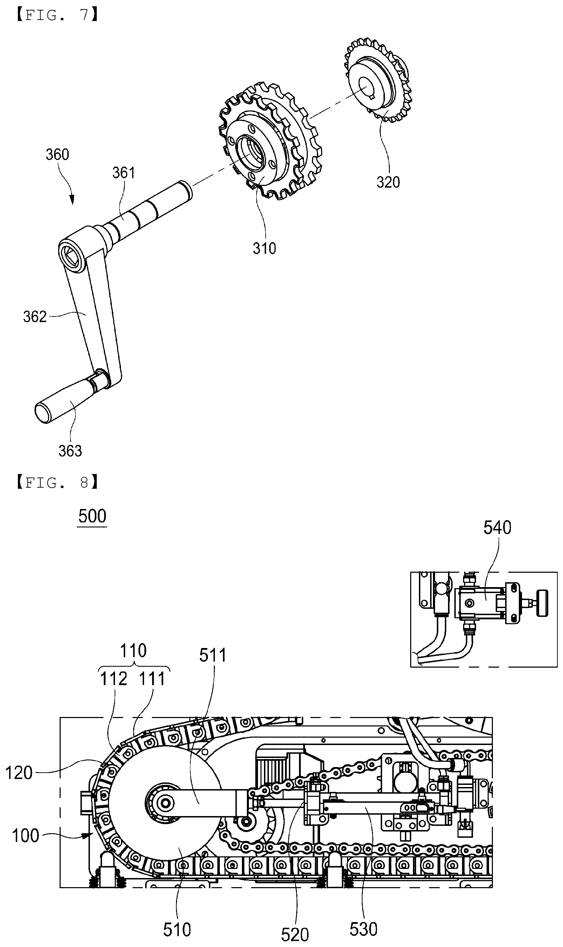

FIG. 5 is an enlarged view of the driving part constituting the conveyor apparatus according to the present invention when viewed from one side, FIG. 6 is an enlarged view of the driving part constituting the conveyor apparatus according to the present invention when viewed from the other side, and FIG. 7 is an exploded perspective view illustrating a handle unit of the driving part constituting the conveyor apparatus according to the present invention.

Referring to FIGs. 1 to 7, the driving part 300 configured to drive the conveyor belt 100 to one side or the other side may include a first sprocket 310, a second sprocket 320, a third sprocket 330, a chain member 340, a motor 350, and a handle unit 360.

The first sprocket 310 is in contact with the conveyor belt 100 and transmits driving force for conveyance to the conveyor belt 100. The first sprocket 310 has teeth formed on an outer circumferential surface thereof, a protruding member (not shown) extending from the link member 112 in a front-to-rear direction (Z-axis direction) or the connection shaft 120 protruding through the through-hole in the front-to-rear direction is coupled to a plurality of recesses formed by the plurality of teeth, and the conveyor belt 100 is driven as the first sprocket 310 rotates.

The first sprocket 310 may be connected to the second sprocket 320 via a shaft member (not shown), and the second sprocket 320 may be connected to the third sprocket 330 via the chain member 340.

Here, the third sprocket 330 is connected to a rotary shaft of the motor 350, and as the motor 350 provides a driving force for rotation, the third sprocket 330 may rotate to transmit a driving force for conveyance to the chain member 340. More specifically, the third sprocket 330 has teeth formed on an outer circumferential surface thereof, and the chain member 340 is fastened to a plurality of recesses formed by the plurality of teeth. As the third sprocket 330 is rotated by the motor 350, therefore, the third sprocket may transmit a driving force for conveyance to the chain member 340.

Accordingly, the chain member 340 may transmit the driving force for conveyance received from the third sprocket 330 to the second sprocket 320, and the second sprocket 320 may transmit a driving force for rotation to the first sprocket 310 connected thereto via the same rotary shaft.

Due to transmission of the driving force for rotation, the first sprocket 310 may transmit the driving force for rotation provided by the motor 350 to the conveyor belt 100.

In addition, the handle unit 360 may be configured to allow the first sprocket 310 to be manually rotated in the state in which the provision of the driving force for rotation from the motor 350 is interrupted, and may include a fastening shaft 361 axially connected to the first sprocket 310, an extension member 362, and a handle portion 363.

The fastening shaft 361 may be inserted into the center of the first sprocket 310. In this case, the center of the first sprocket 310 is the same as the rotary shaft of the first sprocket 310, and therefore as the fastening shaft 361 rotates, the first sprocket 310 also rotates.

In addition, the extension member 362 may extend perpendicularly from an end of the fastening shaft 361. For example, the extension member 362 may extend from the fastening shaft 361 extending in the Z-axis direction along the X-Y plane.

The handle portion 363 may extend perpendicularly from the extension member 362, and may extend in the same axial direction as the fastening shaft 361. That is, the handle portion 363 may extend from an end of the extension member 362 extending along the X-Y plane in the Z-axis direction, which is the same direction as the fastening shaft 361 extends.

The handle unit 360 allows the first sprocket 310 to rotate and drive the conveyor belt 100 as an operator rotates the fastening shaft 361 using the handle portion 363. Therefore, the operator may manually drive the conveyor belt 100 to diagnose the state of the conveyor belt 100 in the state in which the provision of the driving force for rotation from the motor 350 is interrupted.

The roller part 400 may include a first roller 410 and a second roller 420 configured to change the conveying direction of the conveyor belt 100 in contact with the conveyor belt 100. Here, each of the first roller 410 and the second roller 420 is an idler and does not transmit a direct driving force to the conveyor belt 100, but may support the conveyor belt 100 to provide tension to the conveyor belt or change the conveying direction of the conveyor belt 100.

More specifically, the first roller 410 may be located between the conveyor belt 100 exposed from the inner space S of the frame part 200 and conveyed above the frame part 200 and the first sprocket 310 to change the conveying direction of the conveyor belt 100 such that the conveyor belt is conveyed to the first sprocket 310 or above the frame part 200.

In addition, the first roller 410 may be in contact with the seating member 111 of the conveyor belt 100 to maintain the tension of the conveyor belt 100. The first roller 410 may be in contact with a seating surface of the seating member 111, and may have a first friction member 411 provided on an outer circumferential surface thereof. In this case, the first friction member 411 may be made of an elastic material, such as rubber or silicone, to prevent damage to the seating surface of the seating member 111.

The second roller 420 may be located between the conveyor belt 100 exposed from the inner space S of the frame part 200 and conveyed above the frame part 200 and the tension adjustment part 500 to change the conveying direction of the conveyor belt 100 such that the conveyor belt is conveyed to a tension roller 510 of the tension adjustment part 500 or above the frame part 200.

In addition, the second roller 420 may be in contact with the seating member 111 of the conveyor belt 100 to maintain the tension of the conveyor belt 100. The second roller 420 may be in contact with the seating surface of the seating member 111, and may have a second friction member 421 provided on an outer circumferential surface thereof. In this case, the second friction member 421 may be made of an elastic material, such as rubber or silicone, to prevent damage to the seating surface of the seating member 111.

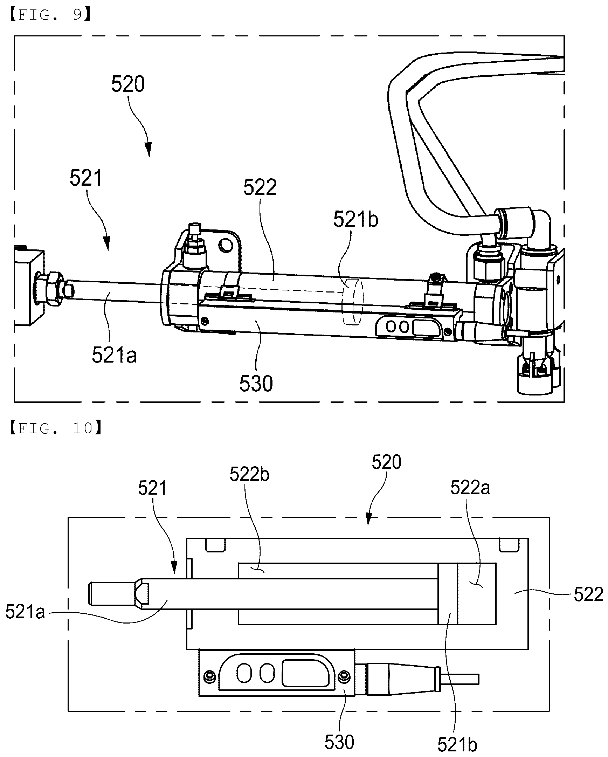

FIG. 8 is an enlarged view illustrating the tension adjustment part constituting the conveyor apparatus according to the present invention, FIG. 9 is an enlarged view illustrating a cylinder part of the tension adjustment part constituting the conveyor apparatus according to the present invention, and FIG. 10 is an internal sectional view of the cylinder part constituting the conveyor apparatus according to the present invention.

Referring to FIGs. 1 to 10, the tension adjustment part 500 is in contact with a part of the conveyor belt 100 and performs the function of adjusting the tension of the conveyor belt 100. The tension adjustment part 500 may include a tension roller 510, a cylinder part 520, a sensor unit 530, and an air supply part 540.

The tension roller 510 is in contact with the conveyor belt 100, and applies pressure to the conveyor belt 100 to adjust the tension of the conveyor belt 100. In this case, the tension roller 510 may be in contact with the link member 112 of the conveyor belt 100, and may provide tension to the conveyor belt 100 by transmitting the pressure supplied by the cylinder part 520 to the conveyor belt 100.

The tension roller 510 may provide tension to the conveyor belt 100, and may be rotated by driving for conveyance of the conveyor belt 100 so as not to interfere with driving for conveyance of the conveyor belt 100.

The tension roller 510 may be connected to the cylinder part 520 via a fixing member 511 connected to a rotary shaft (not shown) of the tension roller 510 so as not to interfere with the rotation of the tension roller 510. For example, the fixing member 511 extends from both ends of the rotary shaft (not shown) of the tension roller 510 and is connected to a cylinder rod 521a, which will be described later.

The cylinder part 520 coupled to the tension roller 510 provides a forward or backward driving force to the tension roller 510. Here, based on FIG. 8, the forward driving force of the cylinder part 520 is a driving force provided to the tension roller 510 in a 9 o'clock direction, and the backward driving force of the cylinder part 520 is a driving force provided to the tension roller 510 in a 3 o'clock direction.

The cylinder part 520 may include a cylinder unit 521 and a housing 522. The cylinder unit 521 includes a cylinder rod 521a coupled to the tension roller 510 via the fixing member 511 and a cylinder head 521b, wherein the cylinder head 521b may be disposed in an inner space of the housing 522.

In addition, the cylinder rod 521a may extend from the cylinder head 521b and be connected to the fixing member 511 of the tension roller 510. In this case, for example, the fixing member 511 includes a floating joint, wherein the floating joint may be connected to the cylinder rod 521a such that even if eccentricity occurs because the operating center of the cylinder part 520 and the operating center the fixing member 511 do not coincide with each other, the eccentricity can be compensated to ensure smooth linear motion of the cylinder part 520.

The housing 522 may have an inner space to enable reciprocating motion of the cylinder unit 521, and a part of the cylinder unit 521 may be received in the inner space. In addition, the inner space may be divided into a first space 522a and a second space 522b by the cylinder head 521b.

In this case, the first space 522a of the housing 522 may be formed on the other side (3 o'clock direction in FIG. 10) partitioned by the cylinder head 521b, and the second space 522b of the housing may be formed on one side (9 o'clock direction in FIG. 10) on which the cylinder rod 521a extends from the cylinder head 521b.

Meanwhile, the cylinder part 520 may be configured such that the cylinder unit 521 is driven forward and backward by the pressure difference between the first space 522a and the second space 522b. More specifically, the cylinder part 520 may be configured such that the pressure provided in the first space 522a is higher than the pressure provided in the second space 522b and the forward driving force is transmitted to the cylinder unit 521 due to the pressure difference between the second space 522b and the first space 522a.

At this time, the tension roller 510 may press the conveyor belt 100 due to the forward driving force of the cylinder part 520, whereby tension may be provided to the conveyor belt 100.

The sensor unit 530 may be disposed on one side surface of the cylinder part 520, wherein the sensor unit 530 may be a position detection sensor configured to detect the position of the cylinder unit 521.

More specifically, the sensor unit 530 may detect the amount of tension provided to the conveyor belt 100 by detecting the position of the cylinder unit 521 using a magnet embedded in the cylinder unit 521, e.g., the cylinder head 521b.

For example, the sensor unit 530 may be configured to detect the position of the cylinder unit 521 when the conveyor belt 100 is pressed by the pressure provided by the cylinder part 520. At this time, a position information signal of the cylinder unit 521 detected by the sensor unit 530 may be transmitted to the controller 700 via a wired or wireless connection.

The controller 700 may measure the tension value applied to the conveyor belt 100 based on the position information of the cylinder unit 521 detected by the sensor unit 530, and may perform control such that the cylinder part 520 provides pressure corresponding to the measured tension value.

For example, when the conveyor belt 100 is pressed by the pressure provided by the cylinder part 520, the controller 700 may determine the tension of the conveyor belt 100 by comparing the position of the cylinder unit 521 with positions preset according to pressure values, and may control the pressure of the cylinder part 520 such that, if an error occurs, the pressure corresponding thereto is provided.

More specifically, for example, if the position of the cylinder unit 521 is farther forward (in 9 o'clock direction in FIG. 10) than the preset position corresponding to the pressure value when the conveyor belt 100 is pressed by the cylinder part 520, the controller 700 may determine that the conveyor belt 100 has become looser and may increase the pressure of the cylinder part 520.

In addition, as another example, if the position of the cylinder unit 521 is farther backward (in 3 o'clock direction in FIG. 10) than the preset position corresponding to the pressure value when the conveyor belt 100 is pressed by the cylinder part 520, the controller 700 may determine that the conveyor belt 100 has become tighter and may decrease the pressure of the cylinder part 520.

The controller 700 may measure the amount of tension of the conveyor belt 100 detected by the sensor unit 530 and adjust the driving force of the cylinder part 520 through the air supply part 540. The air supply part 540 may inject air into the inner space of the housing 522 to adjust the pressure of the inner space of the housing 522.

At this time, the air supply part 540 may be connected to the first space 522a of the housing 522 and supply or discharge air into or from the first space 522a to adjust the pressure of the air in the first space 522a. Here, the air supply part 540 may be an electric regulator capable of automatically controlling the pressure of the air in the first space 522a.

Meanwhile, the second space 522b of the housing 522 is not connected to the air supply part, and therefore the first space 522a may always have higher pressure than the second space 522b. The cylinder unit 521 may be driven forward by the pressure in the first space 522a to measure the tension of the conveyor belt 100 while facing the conveyor belt 100.

However, the present invention is not limited thereto. The second space 522b may be connected to the air supply part, and the air supply part connected to the second space 522b may adjust the pressure of the air in the second space 522b so as to be lower than the pressure of the air in the first space 522a such that the cylinder unit 521 is driven forward. In addition, when the cylinder unit 521 needs to be moved backward based on the tension of the conveyor belt 100, the air supply part may adjust the pressure of the cylinder part 520 such that the cylinder unit 521 is moved backward by increasing the pressure of the air in the second space 522b or stopping the supply of air so as to be equal to the pressure of the air in the first space 522a.

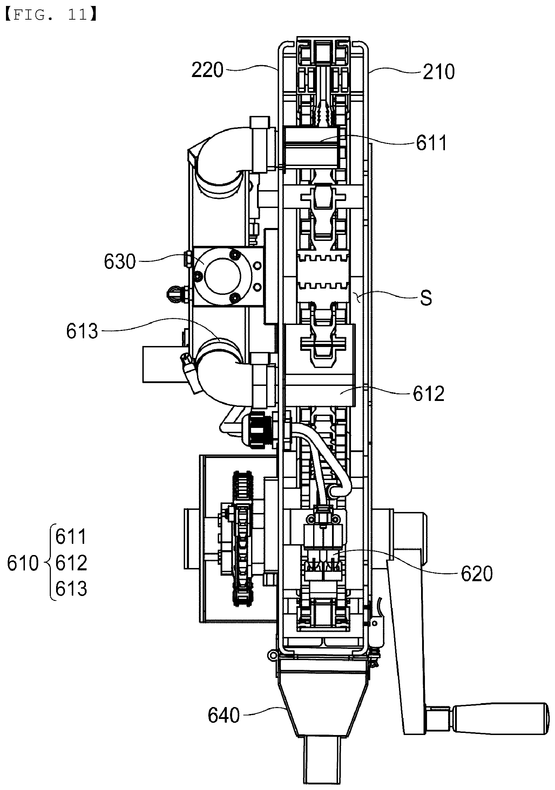

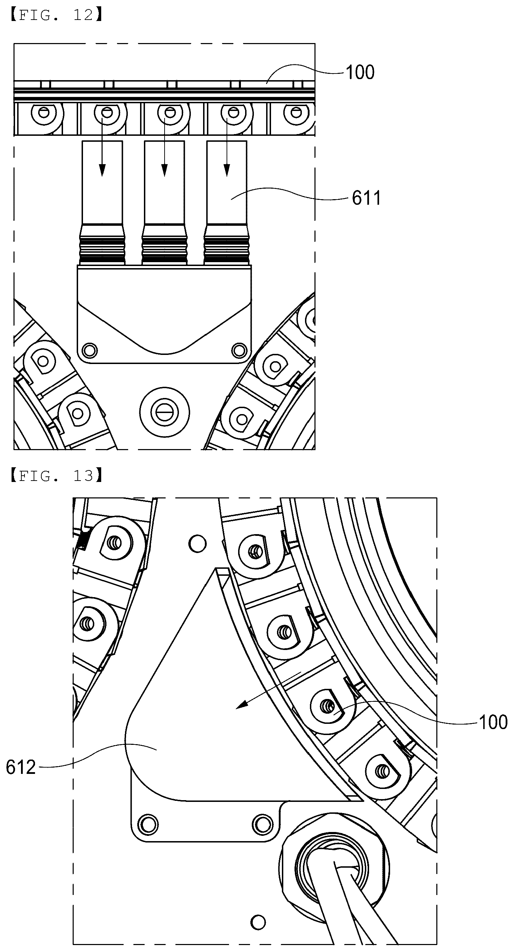

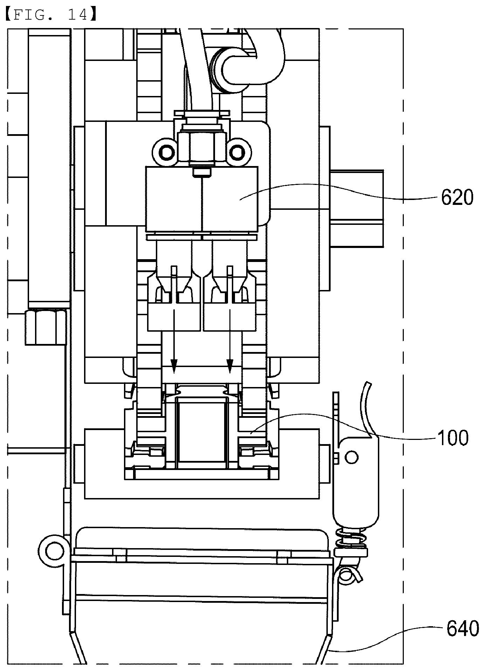

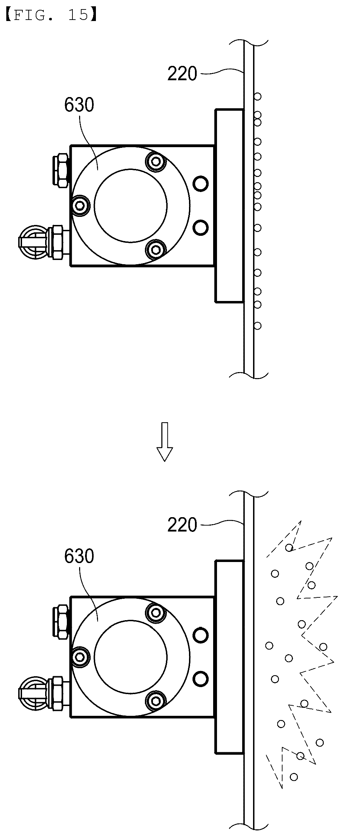

FIG. 11 is an internal sectional view of the conveyor apparatus according to the present invention, illustrating the foreign matter removal part constituting the conveyor apparatus, and FIG. 12 is an enlarged view illustrating a first suction unit constituting the conveyor apparatus according to the present invention. In addition, FIG. 13 is an enlarged view illustrating a second suction unit constituting the conveyor apparatus according to the present invention, FIG. 14 is an enlarged view illustrating an air ejection unit constituting the conveyor apparatus according to the present invention, and FIG. 15 is an enlarged view illustrating a vibration providing unit constituting the conveyor apparatus according to the present invention.

Referring to FIGs. 1 to 15, the foreign matter removal part 600 may be configured to remove foreign matter from the conveyor belt 100 and/or the inner space S of the frame part 200. The foreign matter removal part 600 may include a suction part 610, an air ejection unit 620, a vibration providing unit 630, and a dust collection chamber 640.

The suction part 610 may include a first suction unit 611, a second suction unit 612, and a dust collection unit 613 disposed in the inner space S of the frame part 200 to suction air and/or foreign matter from the conveyor belt 100.

The first suction unit 611 may be configured to suction air and/or foreign matter from the conveyor belt 100 exposed from the inner space S of the frame part 200 and conveyed above the frame part 200. That is, the first suction unit 611 may be configured to suction air and/or foreign matter from the conveyor belt 100 disposed in the inner space S and conveyed above the frame part 200, thereby suctioning foreign matter from the object to be conveyed seated on the conveyor belt 100.

In addition, the second suction unit 612 may be configured to suction air and/or foreign matter from the conveyor belt 100 conveyed in the inner space S of the frame part 200. That is, the second suction unit 612 may be configured to suction air and/or foreign matter from the conveyor belt 100 conveyed into the inner space S while having foreign matter that has not been suctioned by the first suction unit 611.

Furthermore, the second suction unit 612 may be located lower than the first suction unit 611. Therefore, when foreign matter is detached from the object to be conveyed seated on the conveyor belt 100, the second suction unit 612 may suction and remove foreign matter that has not been suctioned by the first suction unit 611.

The dust collection unit 613 may be connected to the first suction unit 611 and the second suction unit 612 to collect foreign matter suctioned by the first suction unit 611 and the second suction unit 612. The dust collection unit 613 may provide a negative pressure state to the conveyor belt 100 such that the first suction unit 611 and the second suction unit 612 suction air and/or foreign matter.

That is, the dust collection unit 613 may be a known suction means (not shown) configured to provide suction force, such as a vacuum pump, such that the first suction unit 611 and the second suction unit 612 suction foreign matter. As another example, the dust collection unit may be a chamber connected to a known suction means (not shown), such as a vacuum pump.

The dust collection unit 613 may be disposed outside the frame part 200. For example, the dust collection unit 613 may be disposed on an outer surface of the second frame 220, and may be connected to the first suction unit 611 and the second suction unit 612 through the through-hole formed in the second frame 220.

In addition, the air ejection unit 620 may be disposed in the inner space S of the frame part 200 and may be configured to eject air toward the conveyor belt 100. The air ejection unit 620 may receive air from the air supply part 540 and eject the air toward the conveyor belt 100. The ejected air may remove foreign matter deposited on or attached to the conveyor belt 100.

At this time, it is desirable for the air ejection unit 620 to be disposed so as to eject air toward the conveyor belt 100 conveyed in the inner space S at a lower part thereof. Accordingly, when the air ejection unit 620 ejects air toward the conveyor belt 100, the air may be ejected downward, whereby foreign matter deposited on or attached to the conveyor belt 100 may fall off downward and collected in the dust collection chamber 640 located at the bottom of the frame part 200.

The vibration providing unit 630 may be disposed outside the frame part 200 to provide vibration to the frame part 200. The vibration providing unit 630 may remove foreign matter adhered to an inner surface of the frame part 200 by providing vibration from the outer side to the inner side of the frame part 200. For example, the vibration providing unit 630 may be disposed on the second frame 220.

When the vibration providing unit 630 provides vibration to the frame part 200 in the state in which the object to be conveyed is seated on the conveyor belt 100, more foreign matter may be generated from the seated object. Therefore, the vibration providing unit may provide vibration to the frame part 200 in the state in which no object to be conveyed is seated on the conveyor belt 100. More preferably, the vibration providing unit 630 may provide vibration to the frame part 200 when power is supplied to the conveyor apparatus but the conveyor belt 100 is not conveyed.

Here, the vibration providing unit 630 may be an air vibrator, and may be configured to provide vibration through an internal turbine configured to be rotated by the air supplied from the air supply part 540. However, the present invention is not limited thereto, and it is obvious to those skilled in the art that the vibration providing unit 630 can be provided as any of various vibrators, such as an electric vibrator configured to provide vibration using electricity, a hydraulic vibrator configured to provide vibration using hydraulic pressure, and a motor vibrator configured to provide vibration using a motor.

The dust collection chamber 640 has a space communicating with the inner space S of the frame part 200 so as to collect foreign matter removed from the inner surface of the frame part 200 by the vibration providing unit 630, and may be located at the bottom of the frame part 200.

The dust collection chamber 640 may have a size capable of accommodating the entire lower part of the frame part 200 so as to collect at least most of the foreign matter moving downward from the inner space S of the frame part 200. That is, one end of the dust collection chamber 640 connected to the lower part of the frame part 200 may have a size equal to or greater than the sectional size cut along the X-Z plane of the frame part 200.

The dust collection chamber 640 may collect not only foreign matter removed by the vibration providing unit 630 but also foreign matter removed by the air ejection unit 620.

Meanwhile, as described above, the controller 700 may measure the amount of tension of the conveyor belt 100 detected by the sensor unit 530 of the tension adjustment part 500 and adjust the driving force of the cylinder part 520 through the air supply part 540. Furthermore, the controller may perform overall control such that each component of the conveyor apparatus according to the present invention can operate normally.

The controller 700 may be implemented in the form of hardware, may be implemented in the form of software, or may be in the form of a combination of hardware and software. The controller 700 may be implemented in the form of a computing device (an arithmetic device) such as a microprocessor, but is not limited thereto, and may be implemented in any of various forms that are obvious to those skilled in the art.

In addition, the controller 700 may determine the amount of tension received from the tension adjustment part 500 in real time and transmit a tension abnormality signal of the conveyor belt 100 to the operator. The signal may be displayed on an equipment monitor (e.g., a display) or transmitted to an operator's terminal (e.g., a mobile phone).

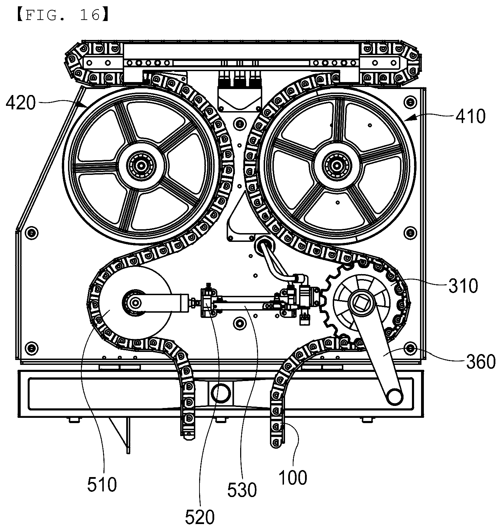

FIG. 16 is a view illustrating the state in which tension is removed from the conveyor belt constituting the conveyor apparatus according to the present invention.

Referring to FIGs. 1 to 16, upon receiving the tension abnormality signal of the conveyor belt 100 from the controller 700, the operator may release the pressure in the cylinder part 520 to remove the amount of tension provided to the conveyor belt 100 in the state in which operation of the driving part 300 is stopped by the controller 700.

Accordingly, the operator may adjust the length of the conveyor belt 100 which has sagged downward due to the removed tension. For example, the operator may open the dust collection chamber 640 located at the bottom of the frame part 200 to expose the conveyor belt 100 to the outside, and may adjust the length of the conveyor belt 100 by removing or adding the number of the unit blocks 110 of the exposed conveyor belt 100 by one or more, thereby responding to the tension abnormality signal of the conveyor belt 100.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

- 100:: Conveyor belt
- 110:: Unit block
- 111:: Seating member 112: Link member
- 120:: Connection shaft
- 200:: Frame part
- 210:: First frame 220: Second frame
- 300:: Driving part
- 310:: First sprocket
- 320:: Second sprocket
- 330:: Third sprocket
- 340:: Chain member
- 350:: Motor
- 360:: Handle unit
- 361:: Fastening shaft 362: Extension member
- 363:: Handle portion
- 400:: Roller part
- 410:: First roller 411: First friction member
- 420:: Second roller 421: Second friction member
- 500:: Tension adjustment part
- 510:: Tension Roller 511: Fixing Member
- 520:: Cylinder part
- 521:: Cylinder unit
- 521a:: Cylinder rod 521b: Cylinder head
- 522:: Housing
- 522a:: First space 522b: Second space
- 530:: Sensor unit
- 540:: Air supply part
- 600:: Foreign matter removal part
- 610:: Suction part
- 611:: First suction unit 612: Second suction unit
- 613:: Dust collection unit
- 620:: Air ejection unit
- 630:: Vibration providing unit
- 640:: Dust collection chamber
- 700:: Controller
- S:: Inner space

## Claims

1. A conveyor apparatus comprising:
a conveyor belt configured to allow an object to be conveyed to be seated thereon;
a frame part having an inner space in which a part of the conveyor belt is received;
a driving part configured to drive the conveyor belt to one side or the other side;
a roller part configured to guide conveyance of the conveyor belt;
a tension adjustment part configured to adjust tension of the conveyor belt in contact with a part of the conveyor belt; and
a foreign matter removal part configured to remove foreign matter from the conveyor belt and/or the inner space of the frame part, wherein
the tension adjustment part comprises:
a tension roller configured to provide pressure to the conveyor belt in contact with the conveyor belt;
a cylinder part coupled to the tension roller, the cylinder part being configured to provide a forward or backward driving force to the tension roller; and
a sensor unit configured to detect the amount of tension applied to the conveyor belt.

2. The conveyor apparatus according to claim 1, wherein
the cylinder part comprises a cylinder unit coupled to the tension roller and a housing configured to receive the cylinder unit, and
the tension adjustment part further comprises an air supply part configured to inject air into an inner space of the housing to adjust a pressure in the inner space of the housing.

3. The conveyor apparatus according to claim 2, further comprising a controller configured to measure the detected amount of tension and to adjust the driving force of the cylinder part through the air supply part.

4. The conveyor apparatus according to claim 2, wherein the foreign matter removal part comprises:
a suction part disposed in the inner space of the frame part, the suction part being configured to suction air and/or foreign matter from the conveyor belt;
an air ejection unit disposed in the inner space of the frame part, the air ejection unit being configured to eject air toward the conveyor belt; and
a vibration providing unit disposed outside the frame part, the vibration providing unit being configured to provide vibration to the frame part in order to remove foreign matter attached to an inner surface of the frame part.

5. The conveyor apparatus according to claim 4, wherein the suction part comprises:
a first suction unit configured to suction air and/or foreign matter from the conveyor belt conveyed above the frame part;
a second suction unit configured to suction air and/or foreign matter from the conveyor belt conveyed in the inner space; and
a dust collection unit configured to collect the foreign matter suctioned by the first suction unit and the second suction unit.

6. The conveyor apparatus according to claim 5, wherein the dust collection unit is disposed outside the frame part.

7. The conveyor apparatus according to claim 4, wherein the foreign matter removal part further comprises a dust collection chamber communicating with the inner space of the frame part, the dust collection chamber being configured to collect the foreign matter removed by the vibration providing unit, the dust collection chamber being located at a bottom of the frame part.

8. The conveyor apparatus according to claim 2, wherein the conveyor belt comprises:
a plurality of unit blocks, each of the plurality of unit blocks comprising a seating member on which the object to be conveyed is seated and a link member configured to support one surface of the seating member; and
a plurality of connection shafts configured to connect the plurality of unit blocks to each other.

9. The conveyor apparatus according to claim 2, wherein the driving part comprises:
a first sprocket provided in contact with the conveyor belt, the first sprocket being configured to transmit a driving force for conveyance to the conveyor belt;
a second sprocket connected to the first sprocket via a shaft member;
a third sprocket connected to the second sprocket via a chain member fastened to teeth formed on an outer circumferential surface of the second sprocket; and
a motor connected to the third sprocket, the motor being configured to a driving force for rotation to the third sprocket.

10. The conveyor apparatus according to claim 9, wherein the driving part further comprises a handle unit axially connectable to the first sprocket so as to allow the first sprocket to be manually rotated in a state in which provision of the driving force for rotation from the motor is interrupted.

11. The conveyor apparatus according to claim 10, wherein the handle unit comprises:
a fastening shaft inserted into a center of the first sprocket;
an extension member extending perpendicularly from the fastening shaft; and
a handle portion extending perpendicularly from the extension member, the handle portion extending in the same axial direction as the fastening shaft.

12. The conveyor apparatus according to claim 9, wherein the roller part comprises:
a first roller located between the conveyor belt conveyed above the frame part and the first sprocket, the first roller being provided in contact with the seating member; and
a second roller located between the conveyor belt conveyed above the frame part and the tension adjustment part, the second roller being provided in contact with the seating member.

13. The conveyor apparatus according to claim 12, wherein
the first roller is provided on an outer circumferential surface thereof with a first friction member, and
the second roller is provided on an outer circumferential surface thereof with a second friction member.
